# EUROPÄISCHE PATENTANMELDUNG

(11) **EP 4 737 654 A1**
(43) Veröffentlichungstag der Anmeldung: **06.05.2026**
(21) Anmeldenummer: 25211964.9
(22) Anmeldetag: 29.10.2025
(51) Int. Cl.: E03C 1/02, F16L 37/00, F16L 37/08, F16L 37/10, F16L 41/08, F16L 41/10, F16L 43/02

(54) **WANDDURCHFÜHRUNG**

(30) Priorität: 30.10.2024 DE 102024131734
(71) Anmelder: Viega Technology GmbH & Co. KG, 57439 Attendorn (DE)
(72) Erfinder: Schröder, Klaus, 57439 Attendorn (DE); Dörseln, Nico, 58566 Kierspe (DE)
(74) Vertreter: Cohausz & Florack

(57) **Zusammenfassung**

Die Erfindung betrifft eine Wanddurchführung mit einem einen Zulauf (4) und einen Ablauf (6) aufweisenden Rohrbogen (8), mit mindestens zwei gegenüberliegend in der Wandung des Ablaufs (6) ausgebildeten Schlüsselflächen (10) und mit einem Flansch (12) mit einer an die mindestens zwei Schlüsselflächen (10) angepassten Innenkontur (14).

## Beschreibung

Die Erfindung betrifft eine Wanddurchführung für eine Leitungsanordnung insbesondere für Trinkwasser.

Wasserleitungen zur Versorgung von Zapfstellen wie z. B. Wasserhähne oder dergleichen werden regelmäßig als Leitungen zwischen einer Wand und einer Vorwand ausgeführt. Dieses ist insbesondere bei Renovierungsarbeiten erforderlich, um ohne einen großen Eingriff in das Mauerwerk die Wasserleitungen verlegen zu können. Des Weiteren werden Sanitärzellen als Einheit werkseitig hergestellt und müssen dann bauseitig an den erforderlichen Leitungen angeschlossen werden. Auch bei Sanitärzellen kann die Wandung der Vorwand betrachtet werden. In beiden Fällen ist nur wenig Bauraum vorhanden.

Wanddurchführungen dienen dabei dazu, eine Anschlussmöglichkeit für Armaturen, Ventile, Leitungen oder ähnlichen Komponenten zur Verfügung zu stellen, ohne eine Montage an der äußeren Wand durchführen zu müssen. Die Wanddurchführung wird an der Vorwand befestigt und der Zulauf der Wanddurchführung wird an eine außerhalb der Vorwand verlaufende Versorgungsleitung, zum Beispiel an eine Wasserleitung, angeschlossen. An den in der Regel im rechten Winkel vom Zulauf wegweisenden Ablauf wird die zu versorgende Komponente wie eine Armatur angeschlossen, so dass das zu leitende Medium, beispielsweise Wasser, von der Versorgungsleitung in die Wanddurchführung und von der Wanddurchführung in die Komponente strömen kann.

Ziel der Installation der Wanddurchführung ist eine Anpassung der Tiefe, mit der der Ablauf in der Vorwand angeordnet ist, an die Dicke der Vorwand. Dabei soll das vordere Ende des Ablaufs mit der Vorwand an der Rauminnenseite abschließen, so dass daran die Sanitärkomponente angeschlossen werden kann, ohne dass nach der Installation der Ablauf zu erkennen ist.

Die Wandscheiben müssen an der Vorwand an einer vorgegebenen Position fixiert und befestigt werden. Zusätzlich zur Wanddurchführung sind weitere Bauteile für eine Schallentkopplung und eine thermische Isolierung zwischen Wandscheibe und Wandhalterung erforderlich.

In der Regel gibt es bei Wanddurchführungen keine Tiefenverstellung. Oftmals wird die Tiefe nur durch Unterlegscheiben eingestellt, die zwischen einem Flansch und der Vorwand angebracht wird. Für die Schallentkopplung wird meist noch ein zusätzliches Bauteil benötigt. Dadurch müssen mehrere Bauteile aufeinandergestapelt werden, was die Montage erschwert.

Aus der EP 4 202 132 A1 ist eine Wanddurchführung mit einem Distanzhalter als Zwischenelement bekannt. Der Distanzhalter ist zwischen einem am Ablauf befestigten Flansch und einer an der Vorwand zu befestigenden Dämpfungsplatte angeordnet. Der Distanzhalter hat an der dem Flansch zugewandten Seite ein asymmetrisches Oberflächenprofil, das mit einem Profil des Flansches derart wechselwirkt, dass sich zwei um 90° verdrehte Anordnungen des Distanzhalters und somit verschiedene Abstände des Flansches von der Vorwand ergeben.

Daher liegt der vorliegenden Erfindung die Aufgabe zugrunde, Reduzierung der Varianten, sowie Vereinfachung der Montage. Außerdem die Möglichkeit, mit nur einem Bauteil, mehrere Wandstärken abdecken zu können.

Die zuvor aufgeführte Aufgabe wird erfindungsgemäß durch eine Wanddurchführung gelöst mit einem einen Zulauf und einen Ablauf aufweisenden Rohrbogen, mit mindestens zwei gegenüberliegend in der Wandung des Ablaufs ausgebildeten Schlüsselflächen und mit einem Flansch mit einer an die mindestens zwei Schlüsselflächen angepassten Innenkontur.

Die Wanddurchführung wird also an der Oberfläche des Ablaufs mit Schlüsselflächen versehen. Der Flansch kann als Kunststoffbauteil ausgebildet sein. Der Flansch ist dabei so geformt, dass er sich auf die Schlüsselflächen aufschieben lässt und anschließend in seiner Position verriegelt. Die Verriegelung kann über ein Einrasten oder ein zusätzliches Bauteil als Verriegelungselement erfolgen. Jedenfalls wird nach dem Verriegeln des Flansches ein Aufspreizen oder Abrutschen des Flansches verhindert.

Eine weitere Möglichkeit der Verriegelung des Flansches ist die Montage an der Vorwand, weil dadurch die Bestandteile des Flansches in ihrer Position fixiert sind, wodurch zwangsläufig auch die Wanddurchführung in ihrer Position fixiert wird.

In bevorzugter Weise kann mehr als ein Paar von sich gegenüberliegenden Schlüsselflächen mit axialem Abstand in der Wandung des Ablaufs ausgebildet sein. Dadurch können - wie erwähnt - verschiedene Wandstärken der Vorwand adaptiert werden.

Durch verschiedene axiale Abstände zwischen den Paaren von Schlüsselflächen und Ende des Ablaufs, also der in die Innenseite der Vorwand weisende Gewindeseite, können verschiedene Wandstärken überbrückt und somit angepasst werden.

Bevorzugt sind die Schlüsselflächen an der Innenseite im Wesentlichen eben ausgebildet. Dadurch wird das Aufschieben und Positionieren des Flansches erleichtert.

Zudem ist es vorteilhaft, wenn zwei sich gegenüberliegende Schlüsselflächen im Wesentlichen parallel zueinander ausgerichtet sind. Somit kann auch die Innenkontur des Flansches mit im Wesentlichen parallelen Teilflächen versehen sein, um ein leichtes Positionieren des Flansches auf den Schlüsselflächen zu erreichen.

Um eine verbesserte Tiefe der Schlüsselflächen im Ablauf zu gewährleisten, kann vorgesehen sein, dass der die Schlüsselflächen aufweisende Abschnitt des Ablaufs eine größere Wandstärke als der Rohrbogen aufweist. Dadurch steht genügend Material für das Ausbilden der Schlüsselflächen zur Verfügung.

In besonders bevorzugter Weise besteht der Flansch aus einem Kunststoff. Dadurch kann der Flansch auch einer Schallentkopplung zwischen dem wasserdurchströmten Rohrbogen der Wanddurchführung und der Vorwand dienen, so dass zusätzliche Bauteile für die Schallentkopplung vermieden werden. Der aus Kunststoff bestehende Flansch entkoppelt den metallenen Rohrbogen von der Vorwand, wodurch deutlich weniger Schall übertragen wird.

Der Flansch weist vorzugsweise eine Mehrzahl von Befestigungsöffnungen auf, um ein Fixieren mittels Schrauben an der Außenseite der Vorwand zu ermöglichen.

Der erfindungsgemäße Flansch kann in verschiedener Weise ausgebildet sein.

Zunächst kann der Flansch einstückig in C-Form, also mit einem offenen Bereich ausgebildet sein. Das hat den Vorteil einer einteiligen Ausbildung, die die Montage auf einer Baustelle vereinfacht, weil weniger Bauteile gehandhabt werden müssen. Der Flansch kann mit dem offenen Bereich über die Schlüsselflächen hinweg geschoben werden, um den Flansch zu positionieren.

Dazu kann die Innenkontur des Flansches am offenen Bereich beabstandete Flächen aufweisen mit einem Abstand kleiner als der Abstand der beiden sich gegenüber angeordneten Schlüsselflächen. Die Innenkontur ermöglicht also ein Hintergreifen der Schlüsselflächen und somit zu einem sicheren Positionieren des Flansches auf den Schlüsselflächen und am Ablauf der Wanddurchführung.

Alternativ dazu kann die Innenkontur des Flansches am offenen Bereich beabstandete Flächen mit einem Abstand entsprechend dem Abstand der beiden sich gegenüber angeordneten Schlüsselflächen aufweisen. Somit kann der Flansch auf die Schlüsselflächen aufgeschoben werden, ohne dass es zu einem Hintergreifen kommt. Zusätzlich ist bei dieser Alternative ein separates Verschlusselement vorgesehen, wobei das Verschlusselement mit den beiden beabstandeten Flächen des Flansches verbindbar ist. Somit kann mittels Formschluss mit entsprechend ausgebildeten Verriegelungselementen ein Fixieren des Flansches auf den Schlüsselflächen und am Ablauf der Wanddurchführung erfolgen.

Neben der einstückigen Ausbildung des Flansches kann der Flansch auch zwei Flanschteile aufweisen, die miteinander verbindbar sind und im verbundenen Zustand die Innenkontur des Flansches ausbilden. Bevorzugt sind die beiden Flanschteile identisch ausgebildet und werden mittels Verbindungselementen oder mittels Verriegelungselementen miteinander verbunden. Der Flansch kann somit am Ablauf befestigt werden.

Im Folgenden wird die Erfindung anhand von Ausführungsbeispielen mit Bezug auf die Zeichnung erläutert. In der Zeichnung zeigen
- Fig. 1 - 5: ein erstes Ausführungsbeispiel einer Wanddurchführung,
- Fig. 6 - 7: ein zweites Ausführungsbeispiel eines Flansches für eine Wanddurchführung und
- Fig. 8 - 9: ein drittes Ausführungsbeispiel eines Flansches für eine Wanddurchführung.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

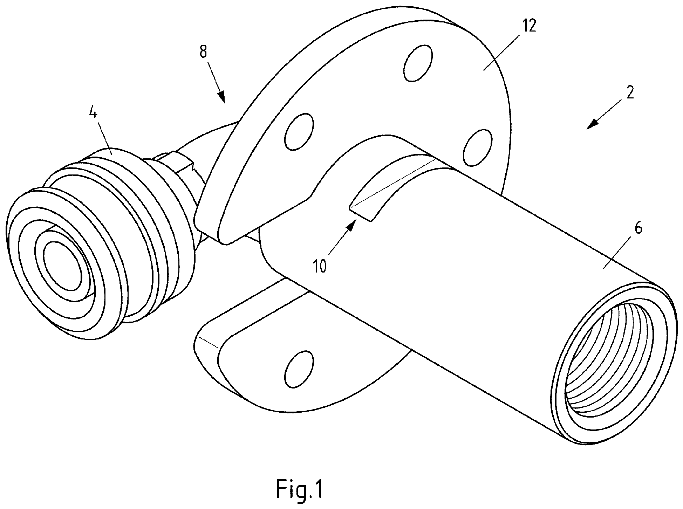

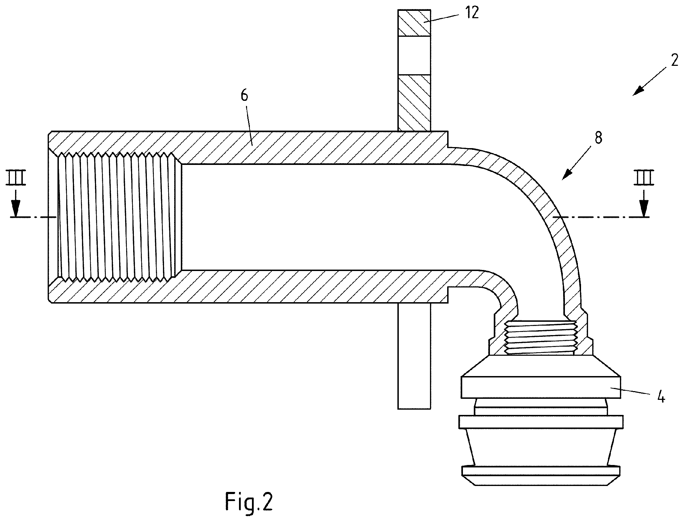

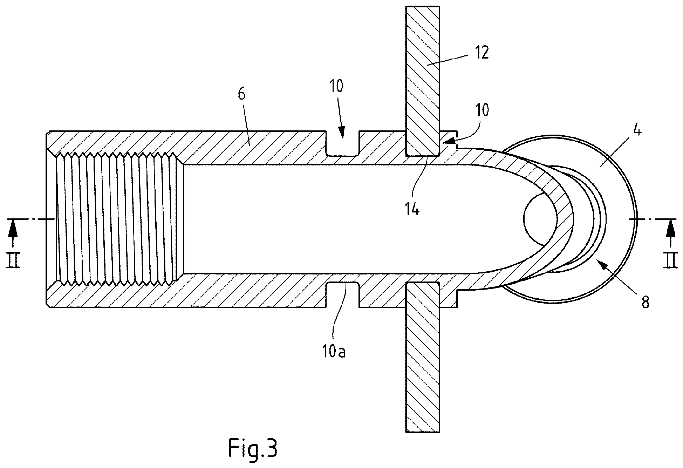

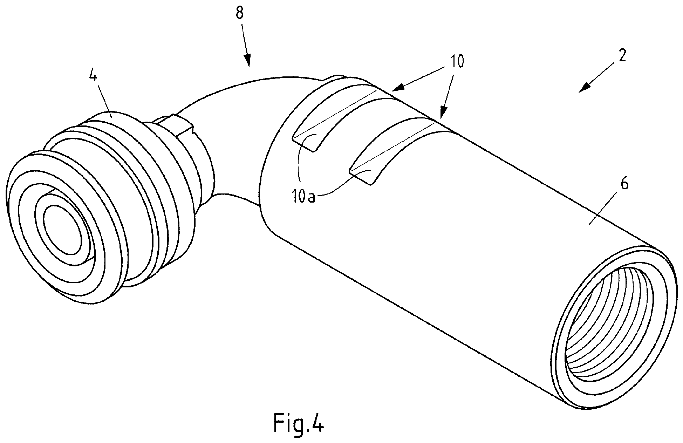

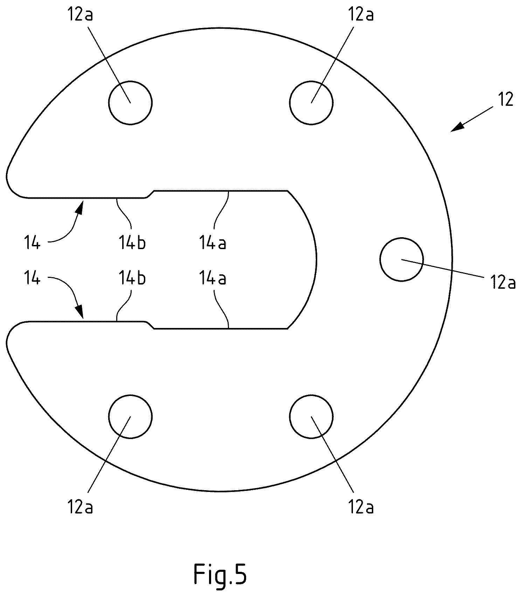

In den Fig. 1 bis 5 ist eine erstes erfindungsgemäße Wanddurchführung 2 mit ihren Einzelteilen in verschiedenen Ansichten dargestellt.

Die Wanddurchführung besteht im Wesentlichen aus zwei Bauteilen und weist einen einen Zulauf 4 und einen Ablauf 6 aufweisenden Rohrbogen 8 auf. Wie in den Fig. 1 bis 4 zu erkennen ist, ist der Zulauf 4 mit einem hier nicht näher erläuterten Fitting für die Verbindung mit einer hinter der Vorwand verlaufenden Leitung versehen. Dagegen weist der Ablauf ein Innengewinde für den Anschluss an eine Leitung oder eine Armatur insbesondere Sanitärarmatur auf.

In der Wandung des Ablaufs 6 sind vier jeweils paarweise gegenüberliegend ausgebildete Schlüsselflächen 10 ausgebildet. Des Weiteren weist die Wanddurchführung 2 einen Flansch 12 mit einer Innenkontur 14 auf, wobei die Innenkontur 14 an die paarweise ausgebildeten zwei Schlüsselflächen 10 angepasst ist.

Der Flansch 12 kann also an zwei, axial voneinander beabstandeten Positionen mit den entsprechenden Paaren von Schlüsselflächen 10 angebracht und zumindest so weit fixiert werden, dass unterschiedlich lange Abschnitte des Ablaufs 6 gegenüber dem Flansch 12 vorstehen. In den Fig. 1 bis 5 ist der Flansch 12 an dem Paar von Schlüsselflächen 10 angeordnet, das weiter vom distalen Ende des Ablaufs 6 als das andere Paar von Schlüsselflächen angeordnet ist.

An dieser Stelle sei erwähnt, dass eine erfindungsgemäße Wanddurchführung 2 auch nur ein Paar von Schlüsselflächen 10 aufweisen kann und somit der Abstand des distalen Endes von der Position eines aufgesetzten Flansches 12 vorgegeben ist und nicht verändert werden kann. Ebenso können mehr als zwei Paare von Schlüsselflächen 10 vorgesehen sein, um mehr als zwei Abstände des distalen Endes von der Position eines aufgesetzten Flansches 12 realisieren zu können.

Wie das Ausführungsbeispiel zeigt, sind die Schlüsselflächen 10 an der Innenseite 10a im Wesentlichen eben ausgebildet. Dadurch kann ein Flansch 12 problemlos aufgeschoben werden. Die Innenkontur 14 weist daher entsprechende eben ausgebildete Abschnitte 14a auf. Zudem sind die Innenseiten 10a von jeweils zwei sich gegenüberliegende Schlüsselflächen 10 im Wesentlichen parallel zueinander ausgerichtet, demensprechend auch die Abschnitte 14a der Innenkontur 14.

Bei dem dargestellten Ausführungsbeispiel weist der die Schlüsselflächen 10 aufweisende Abschnitt des Ablaufs 6 eine größere Wandstärke als der Rohrbogen 8 auf. Dadurch ist das Einbringen der Schlüsselflächen 10 vereinfacht und die Tiefe der Schlüsselflächen 10 innerhalb der Wandung des Ablaufs 6 kann tiefer ausgebildet werden.

Der dargestellte Flansch 12 besteht aus einem Kunststoff, so dass der Flansch 12 schallisolierend wirkt, wenn dieser zwischen dem aus Metall bestehenden Rohrbogen 8 und einer Vorwand befestigt ist. Zudem weist der Flansch 12 eine Mehrzahl von Befestigungsöffnungen 12a auf.

Bei dem in den Fig. 1 bis 5 dargestellten Ausführungsbeispiel ist der Flansch 12 einstückig in C-Form ausgebildet. Dabei weist die Innenkontur 14 des Flansches 12 am offenen Bereich beabstandete Flächen 14b auf, deren Abstand kleiner als der Abstand der beiden sich gegenüber angeordneten Schlüsselflächen 10. Wenn der Flansch 12 aufgeschoben worden ist, dann hintergreift dieser die Schlüsselflächen 10 und bewirkt somit eine genaue Positionierung.

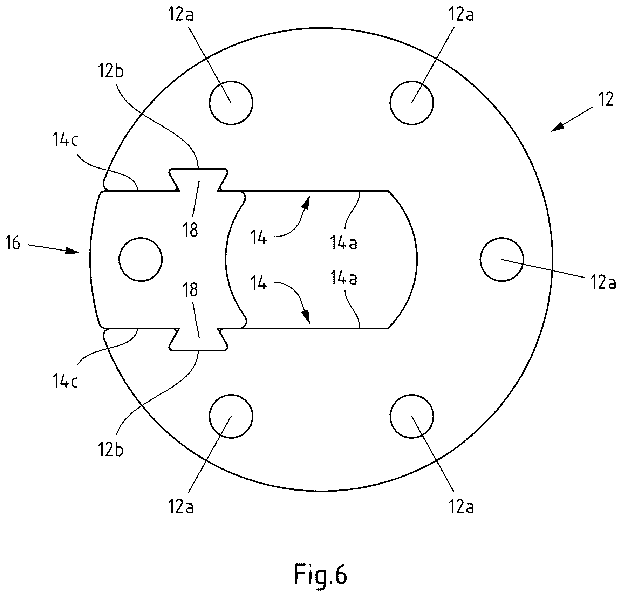

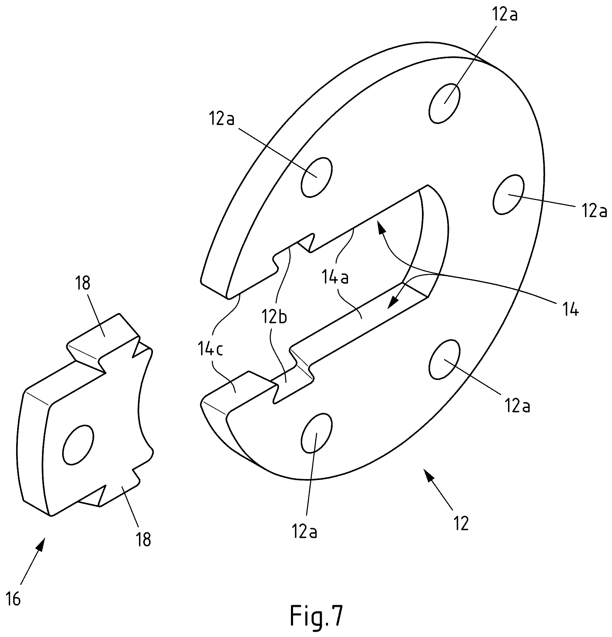

Die Fig. 6 und 7 zeigen ein weiteres Beispiel eines erfindungsgemäßen Flansches 12, bei dem die Innenkontur 14 am offenen Bereich beabstandete Flächen 14c mit einem Abstand entsprechend dem Abstand der beiden sich gegenüber angeordneten Schlüsselflächen 10a aufweist. Ein Hintergreifen wie zuvor beschreiben ist hier also nicht möglich.

Stattdessen ist ein separates Verschlusselement 16 vorgesehen, wobei das Verschlusselement 16 mit den beiden beabstandeten Flächen 14c des Flansches 12 verbindbar ist. Dazu weist das Verschlusselement 16 vorstehende Verriegelungselemente 18 auf, die in entsprechend ausgeformte Ausschnitte 12b des Flansches eingreifen und zu einem Formschluss führen. Die Form des Flansches 12 ist somit geschlossen und der Flansch 12 ist im aufgesetzten Zustand mit dem Ablauf 6 verbunden und kann an der Vorwand befestigt werden.

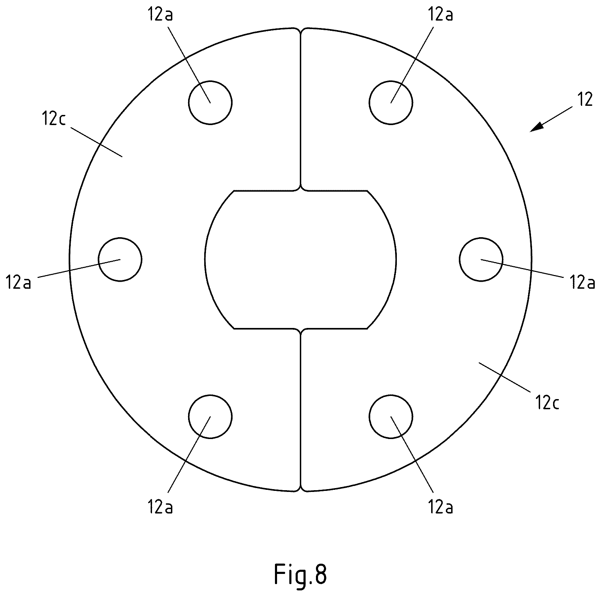

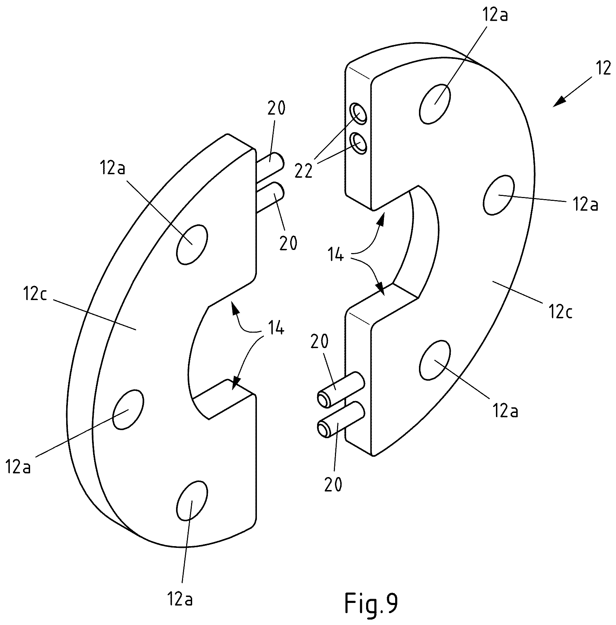

Die Fig. 8 und 9 zeigen ein weiteres Beispiel eines erfindungsgemäßen Flansches 12mit zwei Flanschteilen 12c, wobei die Flanschteile 12c miteinander verbindbar sind und im verbundenen Zustand die Innenkontur 14 des Flansches 12 ausbilden. Dazu weisen die Flanschteile einerseits zwei vorstehende Stifte 20 und andererseits zwei entsprechend ausgebildete Löcher 22 auf. Die beiden Flanschteile 12c können somit ineinander gesteckt werden und bilden somit den vollständigen Flansch 12.

## Patentansprüche

1. Wanddurchführung
- mit einem einen Zulauf (4) und einen Ablauf (6) aufweisenden Rohrbogen (8),
- mit mindestens zwei gegenüberliegend in der Wandung des Ablaufs (6) ausgebildeten Schlüsselflächen (10) und
- mit einem Flansch (12) mit einer an die mindestens zwei Schlüsselflächen (10) angepassten Innenkontur (14).

2. Wanddurchführung nach Anspruch 1,
**dadurch gekennzeichnet,**
**dass** mehr als ein Paar von sich gegenüberliegenden Schlüsselflächen (10) mit axialem Abstand in der Wandung des Ablaufs (6) ausgebildet sind.

3. Wanddurchführung nach Anspruch 1 oder 2,
**dadurch gekennzeichnet,**
**dass** die Schlüsselflächen (10) an der Innenseite (10a) im Wesentlichen eben ausgebildet sind.

4. Wanddurchführung nach einem der Ansprüche 1 bis 3,
**dadurch gekennzeichnet,**
**dass** zwei sich gegenüberliegende Schlüsselflächen (10) im Wesentlichen parallel zueinander ausgerichtet sind.

5. Wanddurchführung nach einem der Ansprüche 1 bis 4,
**dadurch gekennzeichnet,**
**dass** der die Schlüsselflächen (10) aufweisende Abschnitt des Ablaufs (6) eine größere Wandstärke als der Rohrbogen (8) aufweist.

6. Wanddurchführung nach einem der Ansprüche 1 bis 5,
**dadurch gekennzeichnet,**
**dass** der Flansch (12) aus einem Kunststoff besteht.

7. Wanddurchführung nach einem der Ansprüche 1 bis 6,
**dadurch gekennzeichnet,**
**dass** der Flansch (12) eine Mehrzahl von Befestigungsöffnungen (12a) aufweist.

8. Wanddurchführung nach einem der Ansprüche 1 bis 7,
**dadurch gekennzeichnet,**
**dass** der Flansch (12) einstückig in C-Form ausgebildet ist.

9. Wanddurchführung nach Anspruch 8,
**dadurch gekennzeichnet,**
**dass** die Innenkontur (14) des Flansches (12) am offenen Bereich beabstandete Flächen (14b) aufweist mit einem Abstand kleiner als der Abstand der beiden sich gegenüber angeordneten Schlüsselflächen (10a).

10. Wanddurchführung nach Anspruch 8,
**dadurch gekennzeichnet,**
- **dass** die Innenkontur (14) des Flansches (12) am offenen Bereich beabstandete Flächen (14c) mit einem Abstand entsprechend dem Abstand der beiden sich gegenüber angeordneten Schlüsselflächen (10a) aufweist,
- **dass** ein separates Verschlusselement (16) vorgesehen ist und
- **dass** das Verschlusselement (16) mit den beiden beabstandeten Flächen (14c, 12b) des Flansches (12) verbindbar ist.

11. Wanddurchführung nach einem der Ansprüche 1 bis 7,
**dadurch gekennzeichnet,**
- **dass** der Flansch (12) zwei Flanschteile (12c) aufweist und
- **dass** die Flanschteile (12c) miteinander verbindbar sind und im verbundenen Zustand die Innenkontur (14) des Flansches (12) ausbilden.
